# EUROPEAN PATENT SPECIFICATION

(11) **EP 0 639 933 B1**
(45) Date of publication and mention of the grant of the patent: **26.11.2003**
(21) Application number: 94305964.2
(22) Date of filing: 11.08.1994
(51) Int. Cl.: H04S 3/00, H04S 5/02, H04H 1/00

(54) **Method and apparatus for processing an audio signal by surround modes**
Verfahren und Gerät zur Verarbeitung von Audiosignalen durch Rundum-Betriebsarten
Procédé et appareil pour le traitement d'un signal audio par des modes panoramiques

(30) Priority: 19.08.1993 KR 1613993
(43) Date of publication of application: 22.02.1995
(73) Proprietor: SAMSUNG ELECTRONICS CO., LTD., Suwon-city, Kyungki-do 441-373 (KR)
(72) Inventor: Lee, Young-Man, Suwon-City, Kyungki-Do (KR)
(74) Representative: Neill, Alastair William

(56) References cited:
- EP-A- 0 172 095
- EP-A- 0 276 948
- EP-A- 0 467 256
- EP-A- 0 503 154
- GB-A- 2 260 246
- US-A- 4 792 974
- ELEKTOR ELECTRONICS, vol. 17, no. 186, February 1991 CANTERBURY GB, pages 56-61, M. OHSMANN 'RADIO DATA SYSTEM (RDS) DECODER'

## Description

### Field of the Invention

The present invention relates to an audio signal processing apparatus and more particularly to an apparatus and method for processing an audio signal by surround modes in which a surround-sound of an original sound in accordance with surround modes can be reproduced by carrying surround code information to the audio signal being transmitted and by detecting the surround code information upon receipt of the audio signal.

### Background of the Invention

In general, audio sets having a surround circuit capable of providing the surround-sound of a current sound, ie the audio-impression of the sound field where an original sound is produced, to a listener are installed have been now popularised. Unlike stereo, the surround-sound is capable of reproducing the audio-impression of a sound field by generating an inherent reflected sound responsive to an audio signal.

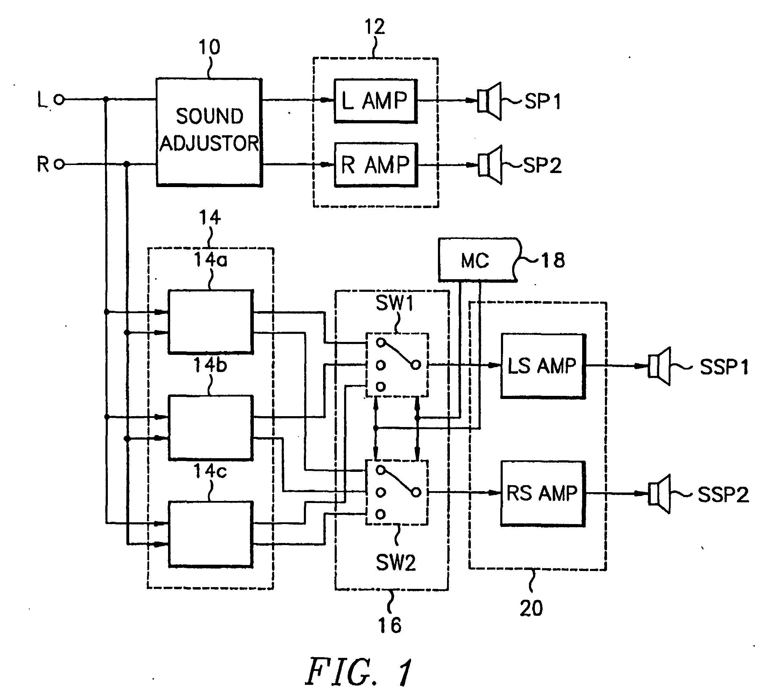

Figure 1 shows an audio apparatus in which the surround circuit is installed, which is disclosed in Korean patent application 92-7759 filed by the applicant of the present application. A surround unit 14 has a plurality of surround circuits 14a, 14b and 14c which delay the audio signal applied from left and right audio input terminals L and R to represent a surround-sound effect different from each other. A switch 16 connects one of the surround circuits 14a, 14b and 14C to left and right surround exclusive speakers SSP1 and SSP2. A controller 18, for example, a micro computer, serves to control the switch 16. A sound adjustor 10 adjusts a base, balance, treble and volume of the audio signal and then outputs the adjusted audio signal through speakers SP1 and SP2. An amplifier 12 is connected to an output terminal of the sound adjustor 10 and amplifies the audio signal supplied to the speakers SP1 and SP2.

The audio apparatus shown in Figure 1 has an advantage of providing a variable surround-sound effect to a user by installing therein a plurality of surround circuits each of which generate a surround-sound effect different from the others.

However, there is much inconvenience in using the audio apparatus shown in Figure 1, since the surround circuits which generate a surround-sound effect corresponding to the surround-sound characteristic of an original sound in a hall, concert, sportsground, theater, etc need to be individually selected by a user in accordance with the surround-sound characteristic.

Moreover, when the surround-sound characteristic of the original sound is not matched with the characteristic of the surround circuit selected by the user, the surround-sound effect to be desired can not be generated fully.

EP-A-0276948 discloses a sound field control device which is capable of producing a sound field effect tone which has a tonal effect providing a listener with a feeling of presence and comprises a sound field effect tone generation circuit for generating a sound field effect tone on the basis of sound field information supplied from a source and source signal. The sound field effect tone is sounded simultaneously with reproduction of the source signal and a reproduced sound field produced on the basis of the source signal is controlled by this sound field effect tone.

EP-A-0503154 discloses an FM receiver for use in a radio data system, wherein a program type code, music/speech switch code and decoder identification code are extracted from received radio data system data, stored sound reproduced in characteristic data such as of tone quality, acoustic field and sound volume that correspond to the extracted codes are read from a data memory, and a predetermined sound reproducing characteristic is then set automatically in accordance with the read-out sound reproducing characteristic data to provide the radio data system receiver with the optimal condition in tone quality, acoustic field and sound volume for reproducing a high quality FM sound in view of the contents of a program and/or a mode of broadcasting.

### Summary of the Invention

It is therefore one aim of embodiments of the present invention to provide a method for processing an audio signal by automatically selecting a surround mode corresponding to a surround-sound characteristic of an original sound.

It is another aim of embodiments of the present invention to provide an adequate apparatus to the method for processing an audio signal as mentioned in the above aim.

According to the present invention, there is provided a method for processing an audio signal in which in a transmitting side, the audio signal is transmitted and in a receiving side, said audio signal is surround-processed, said method comprising the steps of: mixing said audio signal with surround-sound information indicating a surround-sound characteristic in response to original sound timbre in the transmitting side; transmitting the mixed signal in the transmitting side and receiving said mixed signal in the receiving side; separating said audio signal and said surround-sound information from said mixed signal; and surround-processing said audio signal to an audio signal having the surround-sound indicated by said surround-sound information as the surround code information characterised in that said surround code information has a frequency bandwidth of 30 KHz to 40 KHz during modulation/ demodulation.

Thus, there is provided a method of processing transmission/reception of an audio signal, in which in a transmitting side, the audio signal is transmitted and in a receiving side, the surround-sound of the audio signal is processed and output in one of the methods of forming a plural surround signal, comprises the steps of transmitting surround code information indicating a surround sound signal forming method adequate to the audio signal with the audio signal, in the transmitting side and of processing the audio signal in the surround signal forming method designated as the surround code information.

According to the present invention, there is also provided an apparatus for processing an audio signal having a transmitting device which transmits said audio signal and a receiving device which surround-processes said audio signal from the surround-processed audio signal, said apparatus comprising: said transmitting device comprising means for generating a surround discriminating signal indicating a surround mode appropriate to the audio signal of an original sound, and mixing means for mixing said surround discriminating signal with said audio signal; and said receiving device comprising separating means for separating said surround discriminating signal from said surround-processed audio signal, a surround mode detector for detecting a surround mode from said surround discriminating signal separated by said separating means, and surround-sound processing means for surround-processing said audio signal in response to the detection result of said surround mode as the surround code information characterised in that said surround code information has a frequency bandwidth of 30 KHz to 40 KHz during modulation/ demodulation.

Thus, there is also provided an apparatus for processing transmission/reception of an audio signal having a transmitting device in which the audio signal is transmitted and a receiving device in which the audio signal is surround-processed via a surround processor and is output, comprises the transmitting device which is made up of means for generating a surround discriminating signal indicating a surround mode adequate to the audio signal and a mixer for mixing the surround discriminating signal with the audio signal, and the receiving device which is made up of a separator for separating the surround discriminating signal from the audio signal and of a demodulator connected to the separator for recognising the surround mode from the surround discriminating signal to control the surround processor and for performing the surround-process adequate to the audio signal.

### Brief Description of the Drawings

These and other features and advantages of the present invention will be better understood by a reading of the following detailed description of an embodiment of the invention by way of example only, taken in conjunction with the accompanying drawings. In the drawings, it should be noted that like elements represent like symbols or reference numerals, wherein:
Figure 1 is a block diagram showing a conventional audio apparatus having a surround processor;
Figures 2A and 2B are block diagrams showing an apparatus for processing transmission/reception of an audio signal according to the present invention;
Figures 3A to 3D are waveforms showing input/output states of the apparatus for processing an audio signal of Figure 2; and
Figure 4 is a block diagram showing an embodiment of an apparatus for processing an audio signal according to the present invention.

### Detailed Description of the Preferred Embodiments

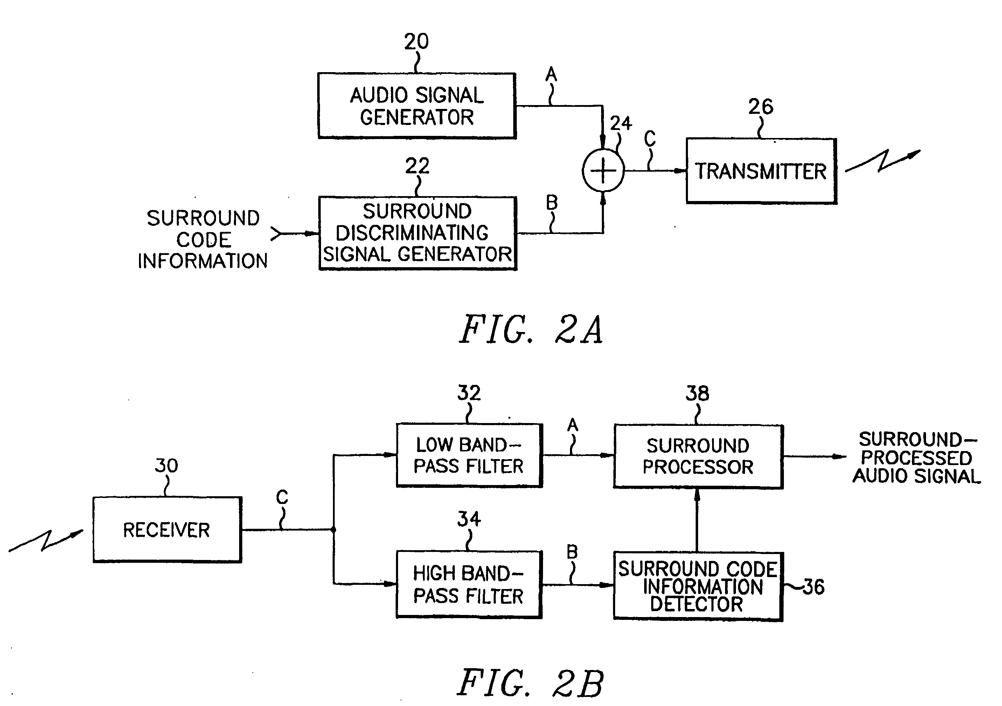

Referring to Figures 2A and 2B as block diagrams showing a preferred embodiment of an apparatus for processing transmission/reception of an audio signal according to the present invention, in a transmitting device of Figure 2A, a reference numeral 20 represents an audio signal generator and 22 represents a surround discriminating signal generator which frequency-modulates surround code information appropriate to the audio signal and outputs the frequency-modulated surround code information. A reference numeral 24 represents a mixer which mixes the frequency-modulated surround code information with the audio signal, and 26 represents a transmitter.

In a receiving device of Figure 2B, a reference numeral 30 represents a receiver and 34 represents a high band-pass filter which filters high bandwidth to extract the surround code information in a receiving signal. Further, a reference numeral 32 represents a low band-pass filter which filters low bandwidth to extract the audio signal in the receiving signal and 36 represents a surround code information detector which detects the surround code information. A reference numeral 38 represents a surround processor which assigns a surround-sound corresponding to surround information by codes to the audio signal in accordance with the detected surround code information.

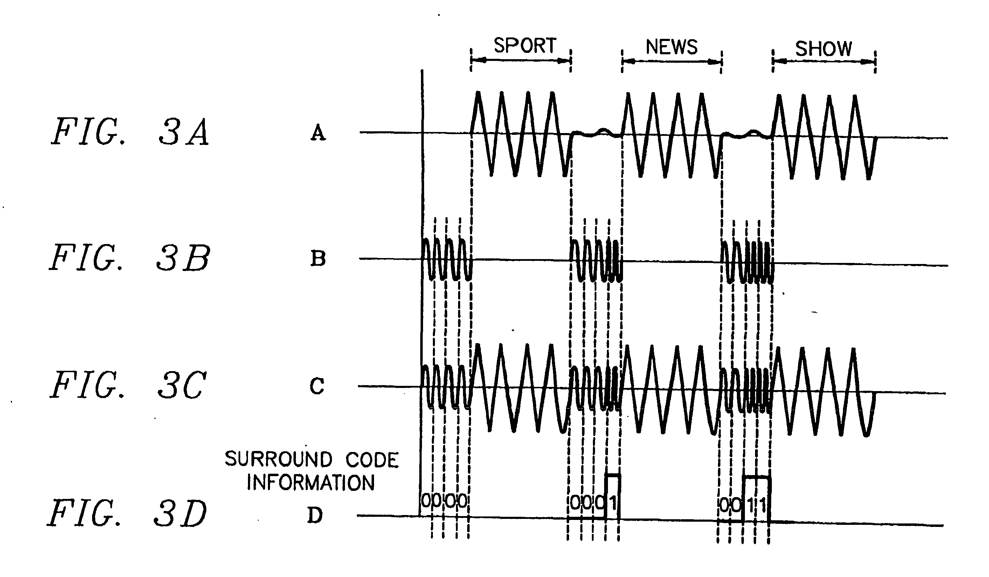

Figures 3A to 3D are waveforms showing the operation of Figure 2. Hereinafter, details of the operation of Figure 2 will be explained with reference to Figures 3A to 3D.

In the case of the illustrative embodiment of Figure 2 as a television system, in a transmitting side, an audio signal and a video signal are processed through separate paths and converted into a radio frequency RF signal to output the converted signal. Herein, since explanation of a video signal process in the embodiment of Figure 2A is unnecessary for the person skilled in the art, it will be avoided herein in order to assist in the explanation of the present invention.

Figure 3A shows waveforms of the audio signals output from an audio signal generator 20 of a transmitting side of a broadcasting station, which may be that of news produced in a hall, a show performed in a concert hall, or a sport played in a sportsground.

At this time, in the transmitting side of the broadcasting station, the surround code information corresponding to a broadcasting program shown in Figure 3A is applied to the surround discriminating signal generator 22. The surround code information is composed of digital values of a binary logic constituted as a preset bit, which is previously determined in a transmitting/receiving side of the broadcasting station. The surround discriminating signal generator 22 modulates the surround code information into a modulated analog signal as shown in Figure 3B. The modulated analog signal is applied to the mixer 24.

Figure 3B shows a surround discriminating signal modulated from the surround code information corresponding to respective different places of Figure 3A. Here, when the binary code of the surround code information is "0", the frequency of the surround discriminating signal is 30 KHz. On the other hand, when the binary code of the surround code information is "1", the frequency of the surround discriminating signal is 40 KHz. It is apparent to those skilled in the art that the frequency bandwidth of the surround discriminating signal is arbitrarily variable within the limit that it does not interfere with the frequency bandwidth of the original audio signal.

The example of classification of the surround code information is indicated by the following TABLE <1>.

**TABLE <1>**

| **Surround Code Information** | **Corresponding Place to Surround Code Information** |
|---|---|
| 0 0 0 0 | Concert Hall 1 |
| 0 0 0 1 | Concert Hall 2 |
| 0 0 1 0 | Sportsground |
| . . . | . . . |
| 1 1 1 1 | Theater |

The audio signal and the surround discriminating signal respectively output from the audio signal generator 20 and the surround discriminating signal generator 22 are mixed in the mixer 24, as shown in Figure 3C. The mixed signal in the mixer 24 is applied to the transmitter 26. The. transmitter 26 converts the mixed signal in accordance with the format of the television signal to thereby transmit the converted television signal to the receiving side of a television receiving device.

In the receiving device of Figure 2B, the mixed signal transmitted from the transmitter 26 of Figure 2A is received by the receiver 30. The mixed signal which is received by the receiver 30 has the audio signal and the surround discriminating signal. Then, the audio signal is extracted through the low band-pass filter 32 and simultaneously the surround discriminating signal is extracted through the high band-pass filter 34. Since the surround discriminating signal uses the frequency bandwidth of the 30 KHz and 40 KHz in the present invention, the low band-pass filter 32 and the high band-pass filter 34 have a cut-off frequency of 30 KHz. Preferably, the cut-off frequencies of the low and high band-pass filters 32 and 34 should not be superposed on each other.

The surround code information detector 36 detects the surround code information as shown in Figure 3D from the surround discriminating signal output from the high band-pass filter 34 and then outputs the surround code information to the surround processor 38. Thus, the surround processor 38 performs a surround-process of the audio signal output from the low band-pass filter 32 in accordance with the surround code information output from the surround code information detector 36 to output the surround-processed audio signal. It should be noted that in the surround processor 38 the surround mode corresponding to the surround code information has previously been agreed upon with the transmitting side of the broadcasting station for instance as set out in Table <1> above. The surround processor 38 can automatically output the surround-processed audio signal corresponding to the surround mode without the surround mode having to be selected by a conventional user.

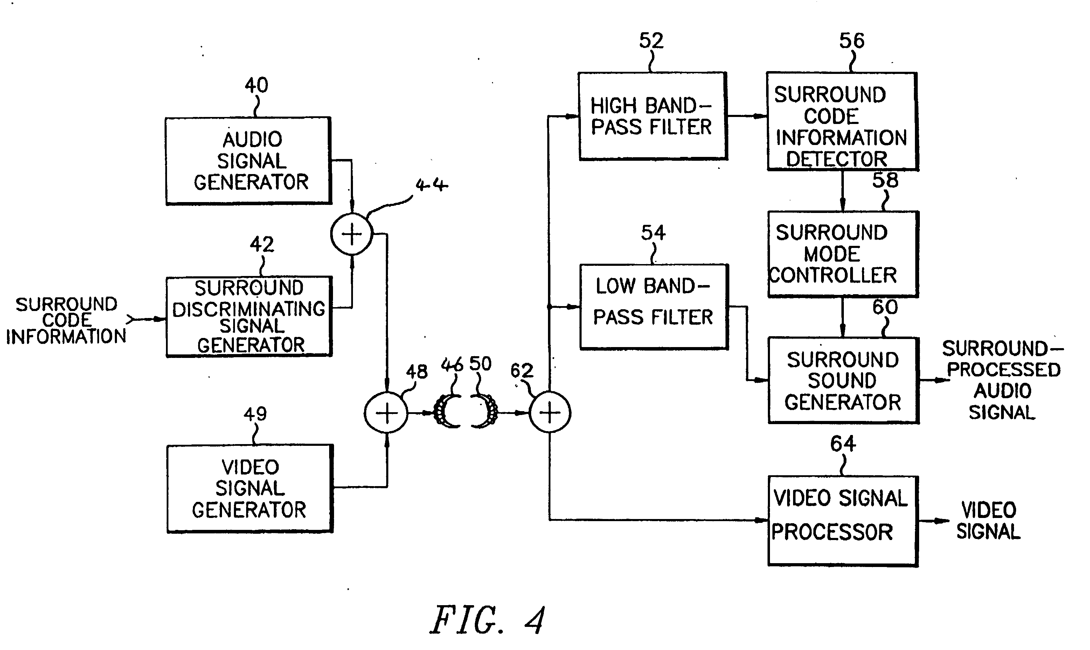

Figure 4 shows an apparatus for processing the transmission/reception of an audio signal according to the present invention in this case embodied in a video recorder.

Details of a process of recording the audio/video signals will be hereinafter explained with reference to Figure 4.

The surround discriminating signal generated from a surround discriminating signal generator 42 and the audio signal generated from an audio signal generator 40 are mixed in a mixer 44. The mixed signals are frequency-modulated in a modulator 48 to be recorded in a tape (not shown) through a recording head 46.

The audio/video signals recorded as set out above are reproduced through the following process.

The audio/video signals recorded in the tape are read through a playback head 50, and the audio signal (mixed with the surround discriminating signal) and the video signal are respectively demodulated through a demodulator 62. Here, the audio signal mixed with the surround discriminating signal demodulated in the demodulator 62 are respectively separated into an audio signal and a surround discriminating signal via high and low band-pass filters 52 and 54. The surround discriminating signal output from the high band-pass filter 52 is applied to the surround code information detector 56, and the audio signal output from the low band-pass filter 54 is applied to the surround-sound generator 60. The surround code information detector 56 detects the surround code information from the surround discriminating signal output from the low band-pass filter 54 and thereby, a surround mode controller 58 controls a surround-sound generator 60 in correspondence with the surround code information. The surround mode controller 58 can use a micro computer, wherein the surround mode corresponding to the surround code information has been established. The surround mode controller 58 outputs a surround mode signal previously established in response to the surround code information. Then, the surround-sound generator 60 assigns a given surround-sound to the audio signal output from the low band-pass filter 54 in response to the surround mode signal output from the surround mode controller 58 and then outputs the surround-processed audio signal. A video signal processor 64 processes the video signal separated in the demodulator 62. Through such a reproducing process, it will be understood that the surround-sound recorded in the video record tape is reproduced like the surround-sound of an original sound.

As hereinbefore explained, an apparatus and method for processing an audio signal by surround modes according to the present invention have an advantage of fully reproducing a surround-sound of an original sound by transmitting or recording a surround discriminating signal indicating a surround mode with the audio signal and by detecting or reproducing the surround discriminating signal to control the surround mode.

## Claims

1. A method for processing an audio signal, in which in a transmitting side, the audio signal is transmitted and in a receiving side, said audio signal is surround-processed, said method comprising the steps of:
mixing said audio signal with surround-sound information indicating a surround-sound characteristic in response to original sound timbre in the transmitting side;
transmitting the mixed signal in the transmitting side and receiving said mixed signal in the receiving side;
separating said audio signal and said surround-sound information from said mixed signal; and
surround-processing said audio signal to an audio signal having the surround-sound indicated by said surround-sound information as the surround code information; **characterised in that** said surround code information has a frequency bandwidth of 30 KHz to 40 KHz during modulation/ demodulation.

2. A method for processing an audio signal as claimed in Claim 1, further **characterised in that** said surround-sound information is a binary logic signal being made up of a given bit and is frequency-modulated/demodulated upon transmission/reception.

3. A method for processing an audio signal as claimed in Claim 1 or Claim 2, further **characterised in that** said surround-sound information is modulated in a higher frequency bandwidth than that of said audio signal.

4. A method for processing an audio signal as claimed in any preceding Claim, further **characterised in that** said surround-sound information is superimposed on said audio signal.

5. An apparatus for processing an audio signal having a transmitting device (26, 46) which transmits said audio signal and a receiving device (30, 50) which surround-processes said audio signal from the surround-processed audio signal, said apparatus comprising:
said transmitting device (26, 46) comprising means (22, 42) for generating a surround discriminating signal indicating a surround mode appropriate to the audio signal of an original sound, and mixing means (24, 44) for mixing said surround discriminating signal with said audio signal; and
said receiving device (30, 50) comprising separating means (32, 34, 52, 54) for separating said surround discriminating signal from said surround-processed audio signal, a surround mode detector (36, 56) for detecting a surround mode from said surround discriminating signal separated by said separating means (32, 34, 52, 54), and surround-sound processing means (38, 58, 60) for surround-processing said audio signal in response to the detection result of said surround mode as the surround code information; **characterised in that** said surround code information has a frequency bandwidth of 30 KHz to 40 KHz during modulation/ demodulation.

6. An apparatus for processing an audio signal as claimed in Claim 5, further **characterised in that** said mixing means (24, 44) outputs said surround-processed audio signal formed by said surround discriminating signal on which said audio signal is superimposed.

7. An apparatus for processing an audio signal as claimed in Claim 5 or Claim 6, further **characterised in that** said surround-sound processing means (38, 56, 58, 60) comprises a surround generator (60) for generating a given surround-sound to said audio signal, and a surround mode controller (58) for controlling said surround generator (60) in response to said surround mode detected in said surround mode detecting means (56).

## Patentansprüche

1. Verfahren zum Verarbeiten eines Audiosignals, wobei auf einer Sendeseite das Audiosignal gesendet wird und auf einer Empfangsseite das Audiosignal Surround-Verarbeitung unterzogen wird und das Verfahren die folgenden Schritte umfasst:
Mischen des Audiosignals mit Surroundklang-lnformation, die eine Surroundklang-Charakteristik anzeigt, in Reaktion auf Original-Klangfarbe auf der Sendeseite;
Senden des gemischten Signals auf der Sendeseite und Empfangen des gemischten Signals auf der Empfangsseite;
Trennen des Audiosignals und der Surroundklang-Information aus dem gemischten Signal; und
Surround-Verarbeitung des Audiosignals zu einem Audiosignal mit dem Surround-Klang, der durch die Surroundklang-Information als der Surround-Codeinformation angezeigt wird, **dadurch gekennzeichnet, dass** die Surround-Codeinformation eine Frequenzbandbreite von 30 Khz bis 40 KHz während der Modulation/Demodulation hat.

2. Verfahren zum Verarbeiten eines Audiosignals nach Anspruch 1, des Weiteren **dadurch gekennzeichnet, dass** die Surroundklang-Information ein binäres Logiksignal ist, das aus einem vorgegebenen Bit besteht und beim Senden/Empfangen Frequenz-Modulation/Demodulation unterzogen wird.

3. Verfahren zum Verarbeiten eines Audiosignals nach Anspruch 1 oder Anspruch 2, des Weiteren **dadurch gekennzeichnet, dass** die Surroundklang-Information in einer höheren Frequenzbandbreite als der des Audiosignals moduliert wird.

4. Verfahren zum Verarbeiten eines Audiosignals nach einem der vorangehenden Ansprüche, des Weiteren **dadurch gekennzeichnet, dass** die Surroundklang-Informationn über das Audiosignal gelegt wird.

5. Vorrichtung zum Verarbeiten eines Audiosignals mit einer Sendevorrichtung (26, 46), die das Audiosignal sendet, und einer Empfangseinrichtung (30, 50), die das Audiosignal aus dem Surround-Verarbeitung unterzogenen Audiosignal Surround-Verarbeitung unterzieht, wobei die Vorrichtung umfasst:
dass die Sendeeinrichtung (26, 46) Mittel (22, 42) zum Erzeugen eines Surround-Unterscheidungssignals, das einen Surround-Modus anzeigt, der zu dem Audiosignal eines Originalklangs passt, sowie Mischmittel (24, 44) zum Mischen des Surround-Unterscheidungssignals mit dem Audiosignal umfasst; und
die Empfangseinrichtung (30, 50) Trennmittel (32, 34, 52, 54) zum Trennen des Surround-Unterscheidungssignals von dem Surround-Verarbeitung unterzogenen Audiosignal, einen Surroundmodus-Detektor (36, 56) zum Erfassen eines Surround-Modus aus dem durch die Trennmittel (32, 34, 52, 54) getrennten Surround-Unterscheidungssignal sowie ein Surroundklang-Verarbeitungsmittel (38, 58, 60) zur Surround-Verarbeitung des Audiosignal in Reaktion auf das Erfassungsergebnis des Surround-Modus als der Surround-Codeinformation umfasst; **dadurch gekennzeichnet, dass** die Surround-Codeinformation eine Frequenzbandbreite von 30 KHz bis 40 KHz während der Modulation/Demodulation hat

6. Vorrichtung zum Verarbeiten eines Audiosignals nach Anspruch 5, des Weiteren **dadurch gekennzeichnet, dass** die Mischeinrichtung (24, 44) das Surround-Verarbeitung unterzogene Audiosignal ausgibt, das durch das Surround-Unterscheidungssignal gebildet wird, über das das Audiosignal gelegt ist.

7. Vorrichtung zum Verarbeiten eines Audiosignals nach Anspruch 5 oder Anspruch 6, des Weiteren **dadurch gekennzeichnet, dass** das Surroundklang-Verarbeitungsmittel (38, 56, 58, 60) einen Surround-Generator (60) umfasst, der einen vorgegebenen Surround-Klang für das Audiosignal erzeugt, sowie eine Surroundmodus-Steuerung (58), die den Surround-Generator (60) in Reaktion auf den in dem Surroundmodus-Erfassungsmittel (56) erfassten Surround-Modus steuert.

## Revendications

1. Procédé de traitement d'un signal audio, dans lequel dans un côté émetteur, le signal audio est transmis et, dans un côté récepteur, ledit signal audio est traité en surround, procédé comprenant les étapes consistant à :
mélanger ledit signal audio avec une information de son surround indiquant une caractéristique de son surround en réponse à un timbre sonore d'origine dans le côté émetteur ;
transmettre le signal mélangé dans le côté émetteur et recevoir ledit signal mélangé dans le côté récepteur ;
séparer ledit signal audio et ladite information de son surround à partir dudit signal mélangé ; et
traiter en surround ledit signal audio en un signal audio ayant le son surround indiqué par ladite information de son surround comme l'information de code de surround ; **caractérisé en ce que** ladite information de code de surround a une largeur de bande de fréquences de 30 kHz à 40 kHz durant la modulation/démodulation.

2. Procédé de traitement d'un signal audio selon la revendication 1, **caractérisé en outre en ce que** ladite information de son surround est un signal logique binaire constitué d'un bit donné et est modulé/démodulé en fréquence lors de la transmission/réception.

3. Procédé de traitement d'un signal audio selon la revendication 1 ou la revendication 2, **caractérisé en outre en ce que** ladite information de son surround est modulée dans une largeur de bande de fréquences plus élevée que ledit signal audio.

4. Procédé de traitement d'un signal audio selon l'une quelconque des revendications précédentes, **caractérisé en outre en ce que** ladite information de son surround est superposée sur ledit signal audio.

5. Dispositif de traitement d'un signal audio ayant un dispositif émetteur (26, 46) qui transmet ledit signal audio et un dispositif récepteur (30, 50) qui traite en surround ledit signal audio à partir du signal audio traité en surround, dispositif comprenant :
ledit dispositif émetteur (26, 46) comprenant des moyens (22, 42) pour générer un signal de discrimination de surround indiquant un mode de surround approprié sur le signal audio d'un son d'origine et des moyens de mélange (24, 44) pour mélanger ledit signal de discrimination de surround avec ledit signal audio ; et
ledit dispositif récepteur (30, 50) comprenant des moyens de séparation (32, 34, 52, 54) pour séparer ledit signal de discrimination de surround dudit signal audio traité en surround, un détecteur de mode surround (36, 56) pour détecter un mode de surround à partir du signal de discrimination de surround séparé par lesdits moyens de séparation (32, 34, 52, 54) et des moyens de traitement en surround (38, 58, 60) pour traiter en surround ledit signal audio en réponse au résultat de détection dudit mode de surround comme l'information de code de surround ; **caractérisé en ce que** ladite information de code de surround a une largeur de bande de fréquences de 30 kHz à 40 kHz durant la modulation/démodulation.

6. Dispositif de traitement d'un signal audio selon la revendication 5, **caractérisé en outre en ce que** lesdits moyens de mélange (24, 44) produisent en sortie ledit signal audio traité en surround formé par ledit signal de discrimination de surround sur lequel ledit signal audio a été superposé.

7. Dispositif de traitement d'un signal audio selon la revendication 5 ou la revendication 6, **caractérisé en outre en ce que** lesdits moyens de traitement de son surround (38, 56, 58, 60) comprennent un générateur de surround (60) pour générer un son surround déterminé sur ledit signal audio et un contrôleur de mode de surround (58) pour commander ledit générateur de surround (60) en réponse audit mode de surround détecté dans lesdits moyens de détection de mode de surround (56).
